# EUROPEAN PATENT APPLICATION

(11) **EP 2 077 450 A1**
(43) Date of publication of application: **08.07.2009**
(21) Application number: 07831356.6
(22) Date of filing: 07.11.2007
(51) Int. Cl.: G01N 27/38, G01N 27/36

(54) **WASHING STORAGE SOLUTION FOR GLASS ELECTRODE AND THE LIKE**

(30) Priority: 08.11.2006 JP 2006302671
(71) Applicant: Horiba, Ltd, Kyoto 601-8510 (JP)
(72) Inventor: NISHIO, Yuji, Kyoto-city Kyoto 601-8510 (JP); IWAMOTO, Yasukazu, Kyoto-city Kyoto 601-8510 (JP)
(74) Representative: Müller - Hoffmann & Partner
(86) International application number: PCT/JP2007/071625
(87) International publication number: WO 2008/056696

(57) **Abstract**

This invention provides a washing storage solution (22), which can substantially completely remove contaminants such as transition metals and alkali metals deposited on the surface of a glass electrode that comprises a glass comprising lithium and can restore performances as an electrode such as responsiveness and reproducibility in the measurement to an initial state or a state better than the initial state. The washing storage solution (22) is **characterized by** comprising at least one reducing reagent having a reduction behavior. Examples of reducing reagents include hydroxylammonium chloride, sodium hyposulfite, sodium hydrogen sulfite, sodium thiosulfate, sodium hypophosphite, ascorbic acid, and titanium oxide.

## Description

### FIELD OF THE ART

This invention relates to a washing storage solution used for a glass electrode or the like and a method for using the washing storage solution.

### BACKGROUND ARTO

The glass electrode is used as a reference electrode and an ion electrode for easily determining a quantity of a hydrogen ion or other ion in a sample used for measuring the pH or other ion, and widely used for environmental measurement, water supply measurement or other various measurements.

A multi-component glass comprising lithium is used as a glass used for these glass electrodes because these glass electrodes require response to a hydrogen ion and so on.

By the way, there is a concern that the measurement is adversely affected, because the glass electrode is contaminated due to continuous use or other factor which causes an asymmetry potential or deteriorates responsiveness.

Then in order to stably conduct measurement of each component contained in drinking water by the use of a glass electrode, it is necessary to remove and wash a residue deposited on an electrode surface or the like and to keep it clean. Conventionally there have been several proposals as a method for washing the electrode.

For example, there is a method for washing the electrode surface by soaking the electrode or the like in a nitric acid solution as a washing solution (refer to patent document 1). This is made by focusing attention on that the residue deposited on the electrode is an ion of a transition metal or its oxide.
Patent document 1: Japan Patent Laid-open number 5-119014

### DISCLOSURE OF THE INVENTION

### PROBLEMS TO BE SOLVED BY THE INVENTION

However, if the nitric acid solution is used as the washing solution, it is not possible to fully solve the above-mentioned metal oxide just by passing the washing solution. In addition, even if the metal oxide can be solved, the performance of the glass electrode is inferior to the initial performance. Then it cannot be considered that the performance as the glass electrode is completely restored.

Then as a result of a keen examination by the inventor of this invention, the inventor has first figured out a cause that the performance of the electrode is degraded or the performance fails to be restored to the initial performance is an influence from a potassium ion or a sodium ion as being an alkali metal and eventually has reached this invention.

More specifically, the inventor has first found that a cause of degrading the responsiveness or reproducibility is that the alkali metal contained in drinking water or an internal solution deposits on a hydrated gel layer of a glass surface when the glass electrode is used or the alkali metal mixed during a manufacturing process is taken into a hydrated gel layer.

With the view to the above-mentioned problems, a main object of the present claimed invention is to provide a washing solution or a storage solution for glass electrodes that removes not only a metal ion of a transition metal deposited on a surface of the electrode or its metal oxide but also an alkali metal.

### MEANS TO SOLVE THE PROBLEMS

More specifically, a washing storage solution in accordance with this invention is for washing or for soaking and storing a glass electrode that comprises a glass comprising lithium, and is characterized by that at least a kind of a reducing reagent having a reduction behavior is comprised.

The reducing reagent having a reduction behavior denotes a reagent that deprives a substance to be a target of an electron or a reagent that generates a substance that deprives an electron.

In accordance with the washing storage solution, since a transition metal or a heavy metal can be changed to a state of being easily diffused by means of a reduction behavior, it is possible to wash the glass electrode effectively and to prevent generation of an asymmetry potential that is caused by that the metal contained in atmosphere or water in various forms is oxidized and taken into a hydrated gel layer while in use or storage.

If the reducing reagent having a reduction behavior is selected from hydroxylammonium chloride, sodium hyposulfite, sodium hydrogen sulfite, sodium thiosulfate, sodium hypophosphite and ascorbic acid, it is possible to store the glass electrode for a long period of time.

In addition, if the reducing reagent having a reduction behavior is a metal and/or its salt whose ionization tendency is bigger than that of hydrogen, it is possible to obtain a washing effect by means of the reduction behavior and bubbles of hydrogen.

Furthermore, if the reducing reagent having a reduction behavior is titanium oxide, it becomes effective also for an organic matter.

The present claimed inventor has found that if the washing storage solution comprises a pH adjusting reagent, it is possible to diffuse the contaminant more effectively depending on the situation.

Furthermore, if an acid is contained as a pH adjusting reagent, it is possible to diffuse the contaminant more effectively because of a reduction behavior and an effect of the acid. Among them, it is preferable that the pH adjusting reagent contains less than or equal to 2 mol/L acid in a hydrogen ionic concentration. If the hydrogen ionic concentration exceeds 2 mol/L, it could lead to deterioration because a surface of the sensitive glass of the electrode is eroded due to a long term soaking.

In addition, if the pH adjusting reagent comprises neutral phosphate, it becomes possible to diffuse the contaminant by means of a reduction behavior and to verify a performance of the electrode since the chemical property of the neutral phosphate is known.

Furthermore, the pH adjusting reagent comprises an alkali that adjusts the pH equal to or smaller than 13, it is possible to diffuse the contaminant by means of a reduction behavior and an alkali activity.

Next, if the washing storage solution in accordance with this invention is applied to a glass electrode having a liquid junction, it is possible to remove not only contaminant of the glass electrode but also contaminant of the liquid junction.

In addition, with a method for washing and storing the glass electrode by the use of the washing storage solution of this invention, it is possible to remove not only contaminant of the glass electrode but also contaminant of the pipe inside of the measuring device.

### EFFECT OF THE INVENTION

In accordance with the washing storage solution of this invention, it is possible to remove not only a transition metal but also an alkali metal so that the contaminant of the glass surface or the liquid junction can be effectively removed. As a result, a performance of the glass electrode can be restored to the initial state.

In addition, in case that the alkali mental is mixed during a manufacturing process, it was verified that the performance of the glass surface was improved to be better than the initial stage by the use of the washing storage solution of this invention.

Furthermore, in accordance with the washing storage solution of this invention, it is possible to prevent generation of an asymmetry potential that is caused by that the metal contained in atmosphere or water in various forms is oxidized and taken into a hydrated gel layer while in use or storage.

Meanwhile, if the washing storage solution of this invention is applied to a glass electrode having a liquid junction, it becomes possible to wash a metal ion or its metal oxide of a transition metal deposited on a liquid junction member constituting a liquid junction, thereby reducing an influence from the deposited residue.

In addition, if the washing storage solution is applied to a measurement device using a glass electrode, it becomes possible to wash not only inside the device but also a pipe of the measurement device without disassembling the device and to reduce an influence from the deposited residue.

### BRIEF DESCRIPTION OF THE DRAWINGS

Fig. 1 is a structural view showing a washing method in accordance with an embodiment of this invention.
Fig. 2 is a general view showing a structure of a liquid junction potential measuring device to conduct an examination such as the embodiment of this invention.
Fig. 3 is a table showing a measurement result of the liquid junction potential in accordance with the embodiment of this invention.
Fig. 4 is a table showing a measurement result of the liquid junction potential in accordance with the embodiment of this invention.
Fig. 5 is a table showing a measurement result of sensitivity in accordance with the embodiment of this invention.
Fig. 6 is a table showing a measurement result of responsiveness in accordance with the embodiment of this invention.

### EXPLANATION OF THE CODE

1 ... electrode body
12 ... sensitive section
21 ... liquid accommodation vessel
22 ... washing storage solution

### BEST MODES OF EMBODYIBNG THE INVENTION

A washing storage solution in accordance with an embodiment of this invention and a method for using the washing storage solution will be explained with reference to drawings.

In this embodiment, the following embodiment was prepared as one example of a washing storage solution used for a glass electrode and an examination 1 through an examination 3 were conducted to verify a performance change of the glass electrode prior to and after use of the washing storage solution.

### (1) About embodiment

The embodiment used for each examination is shown as follows.

### <Embodiment>

The washing storage solution in this embodiment was prepared by adding 2g hydroxylammonium chloride to 100 mL 1 mol (1 mol/L) diluted hydrochloric acid and stirring it so as to be solved. The pH of the washing storage solution is about 0, and a concentration of hydroxylammonium chloride is about 2%.

### (2) General description of the examination

Next, a general description of the examination will be explained.

In the examination 1, an examination was conducted to verify an effect of the washing storage solution for the liquid junction potential.

An examination method is as follows. An electrode whose surface is clean is soaked into a pH4 reference solution (potassium phthalate aqueous solution) · a pH7 reference solution (aqueous solution of monobasic potassium phosphate and disodium hydrogenphosphate) · a pH9 reference solution (sodium tetraborate decahydrate aqueous solution), 1 mol/L diluted hydrochloric acid (equivalent to pH0) and 0.1 mol/L sodium hydrate aqueous solution (equivalent to pH13) as specimens for verification, and then the liquid junction potential was measured and the measurement value was recorded as an initial state.

Next, after the electrode was soaked into a suspected solution for 14 days, the electrode was similarly soaked in each of the reference solutions of pH4 · pH7 · pH9 and 1 mol/L diluted hydrochloric acid (equivalent to pH0) and 0.1 mol/L sodium hydrate aqueous solution (equivalent to pH13) and each of the liquid junction potential was measured again.

10% aqueous solution of α-FeOOH (Goethite) prepared by an aqueous solution method was used as a suspected solution as being an object of a contamination. Since α-FeOOH (Goethite) contained in the suspected solution is a nanoparticle of hydrous ferric oxide, it is easily attached to an electrode or the like. As a result, it is preferable to be used for examining a washing effect.

The effect of washing storage solution was examined by verifying how a performance as an electrode changed by soaking the glass electrode, whose surface the contaminant was attached because the electrode was soaked in the suspected solution for 14 days, in a washing storage solution.

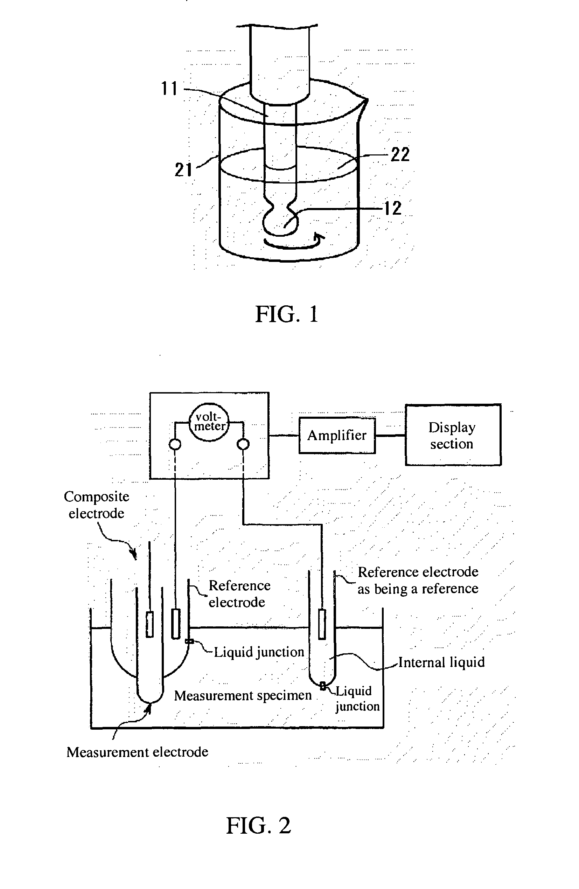

The effect of the washing storage solution was verified by measuring an electric potential difference (hereinafter referred to as a liquid junction potential) between a reference electrode as being a reference and a reference electrode as being an object to be measured by the use of a liquid junction potential measurement device shown in Fig. 2.

Two kinds of electrodes, a composite electrode (hereinafter referred to as a composite electrode) wherein a measurement electrode having a glass comprising silica and lithium and a reference electrode are combined to be a single electrode, and a reference electrode (hereinafter referred to as a reference electrode) having a liquid junction made of ceramics were used as the glass electrode used for examination.

In case of the composite electrode, an electric potential difference between the reference electrode as being the reference and the reference electrode of the composite electrode was measured as the liquid junction potential. More strictly, although there is a small electric potential between an internal liquid of the reference electrode and a specimen locating outside through the liquid junction of the reference electrode, since this electric potential is vanishingly small compared with the electric potential difference between the reference electrode as being the object to be measured and the reference electrode as being the reference, we used this method.

Next, as an examination 2, a change of sensitivity was verified prior to and after soaking the composite electrode.

The sensitivity was obtained by a ratio of the electric potential difference between pH4-pH7, pH7-pH9, and pH4-pH9 to the electric potential difference obtained by a theoretical value from a Nernst response based on the electrode potential obtained by soaking the composite electrode into each of the pH4 · pH7 and pH9 reference solutions. 100% of the sensitivity coincides the theoretical value and means the best.

Furthermore, as an examination 3, a change of responsiveness was verified prior to and after soaking the composite electrode.

The responsiveness of the composite electrode was measured by measuring a fluctuation of each electric potential under the following four conditions.

(Condition 1) The composite electrode was soaked into the pH7 reference solution and taken out at a time when a fluctuation of the reading fell within a range of reproducibility, and then the composite electrode was soaked into the pH4 reference solution and a fluctuation of the electric potential from 10 sec to 15 sec after the initiation of soaking the composite electrode in the pH4 reference solution was measured.

(Condition 2) The composite electrode was soaked into the pH4 reference solution and taken out at a time when a fluctuation of the reading fell within a range of reproducibility, and then the composite electrode was soaked into the pH9 reference solution and a fluctuation of the electric potential from 10 sec to 15 sec after the initiation of soaking the composite electrode in the pH9 reference solution was measured.

(Condition 3) The composite electrode was soaked into the pH9 reference solution and taken out at a time when a fluctuation of the reading fell within a range of reproducibility, and then the composite electrode was soaked into 0.1 mol/L sodium hydrate (equivalent to pH13) and a fluctuation of the electric potential from 10 sec to 15 sec after the initiation of soaking the composite electrode in the 0.1 mol/L sodium hydrate was measured.

(Condition 4) The composite electrode was soaked into 0.1 mol/L sodium hydrate (equivalent to pH13) and taken out at a time when a fluctuation of the reading fell within a range of reproducibility, and then the composite electrode was soaked into 1 mol/L diluted hydrochloric acid (equivalent to pH0) and a fluctuation of the electric potential from 10 sec to 15 sec after the initiation of soaking the composite electrode into 1 mol/L diluted hydrochloric acid was measured.

In each examination, as a method for using the washing storage solution, a glass electrode 11 having a sensitive section that had been soaked into a suspected liquid for 14 days was soaked at a room temperature in the washing storage solution 22 of this invention put into a vessel 21 as shown in Fig. 1.

Next, in order to verify a change depending on a time period while the glass electrode was soaked into the washing storage solution, the glass electrode was taken out from the washing storage solution 1 hour later and 8 hours later. Furthermore, in order to verify an influence on the glass electrode from the time period while the glass electrode was soaked into the washing storage solution, the glass electrode was soaked into the washing storage solution continuously for 14 days.

### (3) Examination result and consideration

### (3-1) Result of the examination 1

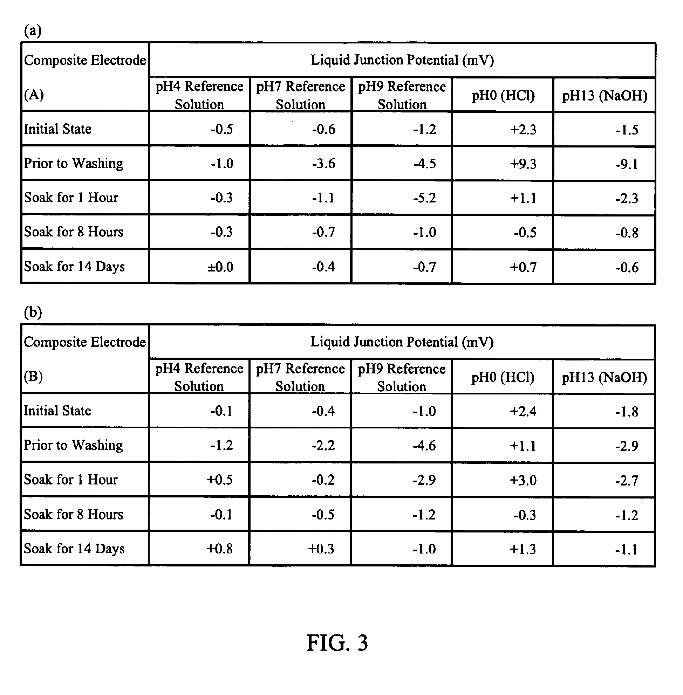

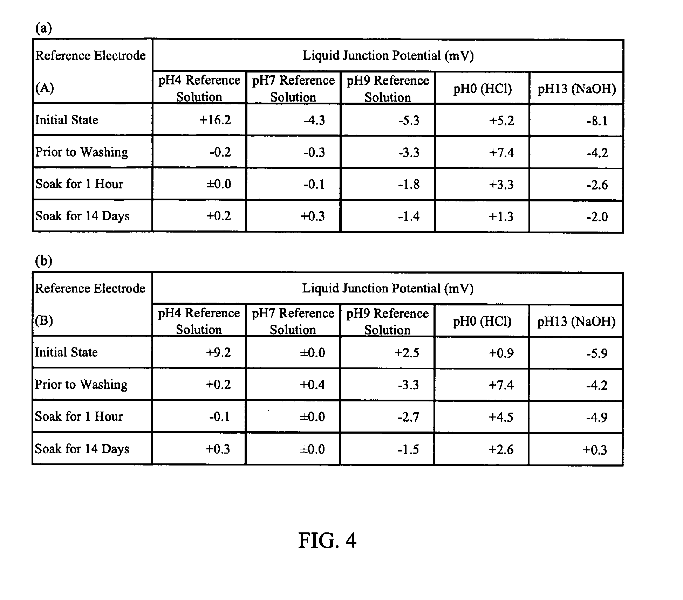

A result of the examination 1 is shown in Fig. 3 and Fig. 4.

Fig. 3 shows measurement results of each liquid junction potential of the composite electrode in an initial state (before soaking the composite electrode into the suspected solution), prior to washing (after soaking the composite electrode into the suspected solution), after the composite electrode is soaked into the washing storage solution for 1 hour, 8 hours and 14 days.

Fig. 4 shows measurement results of each liquid junction potential of the reference electrode in an initial state (before soaking the electrode into the suspected solution), prior to washing (after soaking the reference electrode into the suspected solution), after the reference electrode is soaked into the washing storage solution for 1 hour and 14 days.

From Fig. 3 and Fig. 4, it was revealed that the liquid junction potential of the glass electrode was restored almost to the initial performance after the electrode was soaked in the washing storage solution for 1 hour so that the washing storage solution had the washing effect. According to this result, it is verified that the surface of the electrode and the liquid junction is almost restored to the initial state by washing the electrode with the washing storage solution.

Furthermore, the liquid junction potential of the composite electrode fell within a range from -1.5mV to +1.5mV for every specimen for verification after soaking the composite electrode for 8 hours. Every electrode shows the performance after 8 hours is the same as the initial performance or improved, and it is verified that the surface of the electrode is not only restored to the initial state but also improved to be better than the initial state by soaking the electrode into the washing storage solution.

In addition, even though the every glass electrode is soaked in the washing storage solution for 14 days, a fluctuation of the liquid junction potential is small compared with a case that the electrode is soaked in the washing storage solution for 8 hours, which proves that the washing storage solution produces no adverse effect such as erosion due to the washing storage solution, absorption of the washing storage solution and reattachment or absorption of the contaminant on the electrode surface or the liquid junction.

### (3-2) Result of the examination 2

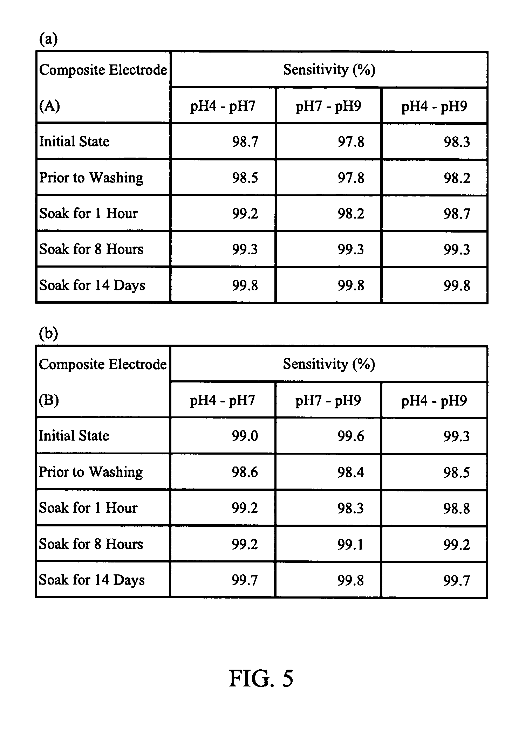

A result of the examination 2 is shown in Fig. 5.

Fig. 5 shows each sensitivity of the composite electrode in the initial state (before soaking the composite electrode into the suspected solution), prior to washing (after soaking the composite electrode into the suspected solution), after the composite electrode is soaked into the washing storage solution for 1 hour, 8 hours and 14 days.

From Fig. 5, it was revealed that the sensitivity of the composite electrode was restored to better than the initial performance after the composite electrode was soaked in the washing storage solution for 1 hour so that the washing storage solution had the washing effect. According to this result, it is verified that the surface of the electrode or the liquid junction is restored to the initial state by washing.

Furthermore, the sensitivity of each glass electrode after soaked in the washing storage solution for 8 hour and 14 days was improved to be better than the initial performance, and it is verified that the surface of the electrode is restored to the initial state or better than the initial state by soaking the electrode into the washing storage solution.

### (3-3) Result of the examination 3

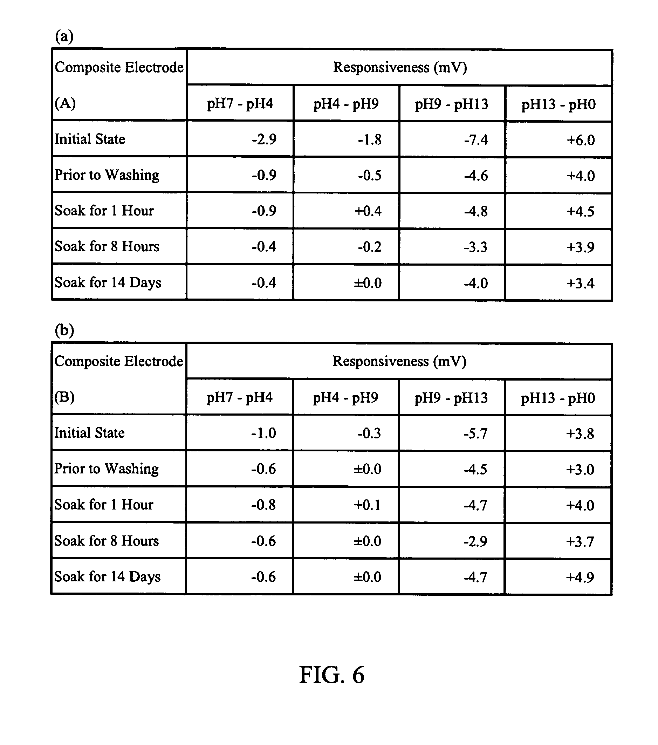

A result of the examination 3 is shown in Fig. 6.

Fig. 6 shows each responsiveness of the composite electrode in the initial state (before soaking the composite electrode into the suspected solution), prior to washing (after soaking the composite electrode into the suspected solution), after the composite electrode is soaked into the washing storage solution for 1 hour, 8 hours and 14 days.

Fig. 6 shows that the fluctuation of the responsiveness fell within 0.4 mV in 10 sec through 15 sec after the composite electrode was soaked in the washing storage solution under (the condition 1) and (the condition 2) of the examination 3. This proved that the response was completed within 10 sec under these conditions.

In addition, under (the condition 3) and (the condition 4) the fluctuation of the responsiveness fell within 4 mV (equivalent to 0.065 pH) after the composite electrode was soaked into the washing storage solution, while the fluctuation of the responsiveness was about 6 mV for 5 sec for the initial performance. This proved an effect that the responsiveness was quickened.

From the above results, in accordance with the washing storage solution of this embodiment, it is possible to restore the glass electrode affected by metals to the initial state in about 1 hour. More specifically, it can be said that the washing storage solution is effective for washing the metal.

With the examination 1 - the examination 3, one of the factors that the performance of the glass electrode is improved to the initial state or a state better than the initial state can be said to be that the influence from the metal as being a cause of an alkali error that hinders the performance of the glass electrode is removed.

The metal that becomes a cause of the alkali error is represented by an alkali metal such as sodium or potassium, a transition metal such as iron or manganese and a heavy metal.

These metals can be the cause of the alkali error by being covalently-bound or ionic-bound with a platform of the glass when the metals are mixed as an impure substance with the glass at a time of sintering the glass during a process of manufacturing the glass electrode or the metals absorb a composition contained in the internal liquid or the suspected solution.

Then the washing storage solution in accordance with this invention produces a washing effect by changing the transition metal or the heavy metal to a state of being easily diffused by means of a reduction behavior and diffusing the metal from a hydrated gel layer on the glass surface to outside by means of an acid or an alkaline.

From this, it can be said that the performance of the electrode is restored to the initial state or to a state better than the initial state because the electrode surface is washed and further improved.

In addition, in case of an electrode having a liquid junction, another factor of improving the performance of the electrode can be said that a contaminant such as a metal clogging or attaching a bore of the liquid junction is removed.

The washing storage solution in accordance with this invention diffuses a substance such as a metal that affects the liquid junction by means of a reduction behavior and an effect of an acid or an alkali, then it can be said that the washing storage solution does not affect diffusion of electrolyte such as potassium chloride contained in the internal liquid of the liquid junction.

In addition, as a reason why the performance as an electrode is improved after the electrode is soaked in the washing storage solution for a long period of time such as 14 days, it can be said that the washing storage solution produces an effect as a washing solution and the glass is hardly changed in quality as well.

Next, as an example to use the washing storage solution, if the washing storage solution further comprises a pH adjusting reagent, it is possible to adjust the liquid factor of the washing storage solution at a predetermined pH from an acid to an alkaline tailored to a usage and an object to be washed.

The washing storage solution of acidity as being this embodiment has a washing effect by changing the transition metal or the heavy metal to a state of being easily diffused by means of a reduction behavior and by diffusing the metal from the hydrated gel layer on the glass surface to outside by means of an acid and is also effective for storing the glass electrode because it does not affect the glass even if the glass is stored in the washing storage solution for a long period of time.

In addition, if the liquid factor of the washing storage solution is neutralized by the use of neutral phosphate as being the pH7 reference solution, it is possible for the washing storage solution comprising a reagent having a reduction behavior to wash the electrode and simultaneously to measure the electric potential by means of the pH7 reference solution, which makes it possible both to restore the performance of the electrode and to verify the performance.

Furthermore, if the washing storage solution is alkaline of pH 13 or smaller, the washing storage solution has a washing effect against the contaminant deposited on the glass electrode by changing the transition metal or the heavy metal to a state of being easily diffused by means of a reduction behavior and by diffusing the metal from the hydrated gel layer on the glass surface to outside by means of an alkaline.

The acid contained in the washing storage solution is not especially limited, however, a strong acid of an inorganic acid such as hydrochloric acid, sulfuric acid and nitric acid is more preferable because the acid not only helps an action of the reagent having a reduction behavior but also can resolve the metal by itself.

Especially, hydrochloric acid is more preferable because it is high in solubility in a metal such as iron or manganese

It is more preferable that an additive amount of the acid is less than or equal to 2 N (hydrogen ionic concentration is 2 mol/L) as the normality because there is no deterioration of the sensitive glass surface of the electrode due to erosion even though the electrode is soaked in the washing storage solution for a long period.

In addition, the alkaline contained in the washing storage solution is not especially limited, however, an alkali metal such as sodium hydroxide or potassium hydroxide or hydroxide of alkaline-earth metal is more preferable because it helps an action of the reagent having a reduction behavior and a hydroxide ion is combined with a metal so that washing can be conducted more effectively.

In addition, since it is possible to promote an exchange reaction of a sodium ion and a potassium ion with a hydroxide ion deposited on a surface of a liquid junction such as ceramics under an alkaline condition, washing can be conducted more effectively.

Under the alkaline condition, the pH 13 and below of the washing storage solution is more preferable because the glass surface will not be eroded significantly so that it becomes easy to deal with the glass electrode while washing.

In addition, since the optimal pH to solve the hydroxide of metal ions to be a cause of a contaminant differs depending on a kind of the metal ions, if the object as being a contaminant is definite, it is possible to improve a washing effect by adjusting the pH of the washing storage solution tailored to the contaminant.

The reducing reagent having a reduction behavior used for the washing storage solution is not especially limited, however, hydroxylammonium chloride, titanium oxide, tin oxide, aluminum, magnesium alloy, sodium hyposulfite, sodium hydrogen sulfite, sodium thiosulfate, sodium hypophosphite and ascorbic acid are preferable.

The reason is that the glass is hardly deteriorated even though it is soaked in the washing storage solution comprising these reducing reagents for a long period of time because these have no chelate effect against silica or lithium comprised in the glass used for a glass electrode.

It is possible to use titanium oxide as being the photocatalyst as the washing storage solution by suspending powders whose particle diameter is, for example, about 80 nm into an appropriate solvent.

Since it is possible for the photocatalyst such as titanium oxide to deprive a metal of an electron by irradiating the light such as natural light, the metal can be changed to a state of being easily diffused. Especially, the photocatalyst is effective for a metal whose ionization tendency is small such as silver. In addition, since the photocatalyst can also resolve an organic substance, it is further effective.

Furthermore, the metal such as tin oxide, aluminum and a magnesium alloy can generate hydrogen in water by dissolving. Then it is possible to effectively change the metal to a state of being easily diffused by means of an effect that the generated hydrogen deprives the electron. In addition, generated air bubbles also produce a washing effect by physically exfoliating contaminants.

The additive amount of the reagent having a reduction behavior for the washing storage solution is not especially limited, however it is effective if 0.1 % or more. In case of reducing the additive amount, it is possible to obtain the washing effect if a period of soaking the electrode into the washing storage solution is prolonged.

Since 0.1% of the reagent produces a washing effect if soaked in the washing storage solution for about half a day, it is possible to make the glass surface clean on the following day, for example, by soaking the glass after use.

Contrarily, in order to improve the effect of washing the glass for a short period of soaking time, the additive amount is increased. For example, the effect can be obtained with 1% of the reagent for about 2 to 3 hours, or 2% of the reagent for about 1 hour.

It is more preferable that the concentration of the reagent having a reduction behavior is 10% or less if a long period of storage is considered.

Furthermore, with the washing storage solution in accordance with this invention, it is possible to wash not only the glass electrode but also the pipe of the measuring device using the glass electrode.

As an example, in case of a water quality monitoring device that measures tap water, it is possible to wash not only the glass electrode but also the pipe by switching a line for supplying specimen water to be measured at a time of, for example, regular check and sending or circulating the washing storage solution through the switched line by means of a pump or the like.

If the washing storage solution in accordance with this invention is applied to a measurement device using a glass electrode, it is possible to wash inside of the measurement device and the pipe without disassembling the measurement device and to contribute to stabilization of the reading of the measurement device by reducing an influence from the deposited residue.

The measurement device is a water quality monitoring device that measures the water supply such as tap water, however an subject to be measured is not limited to tap water, and the measurement device may be a device that measures a continuously or intermittently supplied specimen by the use of a glass electrode.

In addition, it is a matter of course that the present claimed invention can be variously modified without departing from its spirit.

### POSSIBLE APPLICATIONS IN INDUSTRY

The washing storage solution of this invention can be applied to washing and storing a glass electrode.

## Claims

1. A washing storage solution for a glass electorode comprising a litium-containing glass, which comprises reducing reagent in sufficient concentration to provide the removal of residue from the electorode and to permit storage of the glass of the electrode filled with such solution.

2. The washing storage solution described in claim 1, wherein
the reducing reagent is selected from hydroxylammonium chloride, sodium hyposulfite, sodium hydrogen sulfite, sodium thiosulfate, sodium hypophosphite and ascorbic acid.

3. The washing storage solution described in claim 1, wherein
the reducing reagent is a metal and/or its salt whose ionization tendency is bigger than that of hydrogen.

4. The washing storage solution described in claim 1, wherein
the reducing reagent is titanium oxide.

5. The washing storage solution described in either one of claim 1 through claim 4, further comprising a pH adjusting reagent that adjusts the pH to a predetermined value.

6. The washing storage solution described in claim 5, wherein the pH adjusting reagent contains less than or equal to 2 mol/L acid in hydrogen ionic concentration.

7. The washing storage solution described in claim 5, wherein
the pH adjusting reagent comprises neutral phosphate.

8. The washing storage solution described in claim 5, wherein
the pH adjusting reagent comprises an alkali that adjusts the pH equal to or smaller than pH 13.

9. A method for washing or storing a glass electrode that is **characterized by** washing or storing a glass electrode that has a liquid junction and that comprises a glass comprising lithium by the use of the washing storage solution described in claim 1 through claim 8.

10. A method for washing or storing a glass electrode or the like that is **characterized by** washing or storing a glass electrode that comprises a glass comprising lithium or a measurement system body on which the glass electrode is mounted by the use of the washing storage solution described in claim 1 through claim 8.
